# EUROPÄISCHE PATENTSCHRIFT

(11) **EP 2 286 657 B1**
(45) Veröffentlichungstag und Bekanntmachung des Hinweises auf die Patenterteilung: **24.10.2018**
(21) Anmeldenummer: 10008305.4
(22) Anmeldetag: 09.08.2010
(51) Int. Cl.: A01D 69/02, A01D 90/14, A01D 41/127, A01D 43/08, A01F 15/08

(54) **Landmaschine**
Agricultural machine
Machine agricole

(30) Priorität: 20.08.2009 DE 102009038243
(43) Veröffentlichungstag der Anmeldung: 23.02.2011
(73) Patentinhaber: PÖTTINGER Landtechnik GmbH, 4710 Grieskirchen (AT)
(72) Erfinder: Baldinger, Markus, 4084 St. Agatha (AT); Reininger, Markus, 4753 Taiskirchen (AT); Edelbauer, Roland, 4600 Thalheim (AT)
(74) Vertreter: Thoma, Michael

(56) Entgegenhaltungen:
- EP-A1- 1 698 221
- EP-A1- 1 813 459
- DE-A1-102005 005 556

## Beschreibung

Die vorliegende Erfindung betrifft eine Landmaschine, insbesondere in Form einer an einen Schlepper anbaubaren Ernte- und/oder Bodenbearbeitungsmaschine, mit zumindest einem von einem Antrieb antreibbaren Arbeitsaggregat zum Ausführen einer landwirtschaftlichen Funktion, das im Betrieb von einer äußeren, variierenden Belastung wie Erntegutmenge, Bodenhärte oder dergleichen beaufschlagt ist, sowie einer Steuervorrichtung zur Steuerung des Antriebs des Arbeitsaggregats in Anhängigkeit der äußeren Belastung.

Aus der EP 1 698 221 A1 ist ein handgeführter Rasenmäher bekannt, bei dem ein Motor sowohl die Schneidtrommel als auch die Fahrwerksräder antreibt. Dabei wird sensorisch ein Betriebsparameter wie bspw. die Vortriebsgeschwindigkeit, die Motordrehzahl und die Schneidtrommeldrehzahl erfasst und auf einem Display angezeigt, sodass der Bediener entsprechende Maßnahmen ergreifen kann.

Bei landwirtschaftlichen Anbaugeräten wie beispielsweise einem Ladewagen, einer Mähmaschine oder eine Heuwerbungsmaschine in Form eines Zetters oder Schwaders, oder einer Bodenbearbeitungsmaschine wie beispielsweise einer Kreiselegge werden die Arbeitsaggregate, die die landwirtschaftlichen Funktionen des jeweiligen Arbeitsaggregats ausführen, üblicherweise durch einen mechanischen Antrieb angetrieben, der über eine Gelenkwelle von der Zapfwelle des Schleppers her gespeist wird. Alternativ ist auch vorgeschlagen worden, hydraulische Antriebe in Form von Hydromotoren vorzusehen. Dabei sind die genannten landwirtschaftlichen Funktionen beispielsweise die Erntegutbearbeitung, was im Falle eines Ladewagens die Aufnahme des Ernteguts vom Boden durch eine Pickup-Stachelwalze, die Förderung des aufgenommenen Ernteguts in dem Erntegutspeicher mittels eines Förderrotors und auch das Abladen des Ernteguts mittels Dosierwalzen umfasst. Bei einer Mähmaschine ist das unterschiedlich hohe und/oder dichte Halmgut abzuschneiden und gegebenenfalls mittels eines nachgeschalteten Konditionierers zu konditionieren und einem Querförderband seitlich wegzufördern, um das abgeschnittene Halm- und Blattgut in einem Schwad abzulegen. Bei entsprechend anderen Anbaugeräten sind entsprechend andere landwirtschaftliche Funktionen auszuführen, wobei mit "landwirtschaftliche Funktionen" insbesondere die Kernaufgaben des jeweiligen Anbaugeräts gemeint sind, die üblicherweise einer höheren Leistungsaufnahme bedürfen und einer variierenden äußeren Belastung durch Feld-, Erntegut- und/oder Bodengegebenheiten beaufschlagt sind.

Vereinzelt wurde in jüngerer Zeit für die Arbeitsaggregate von Landmaschinen auch die Verwendung von Elektromotoren zu deren Antrieb vorgeschlagen. Beispielsweise zeigt die DE 10 2007 024 644 A1 einen Schlepper, der zu diesem Zweck mit einer Leistungselektronik-Schnittstelle versehen ist, um die von Elektromotoren getriebenen Arbeitsaggregate diverser Landmaschinen speisen zu können. Weiterhin zeigt die DE 10 2007 038 510 A1 einen Düngerstreuer, bei dem die Verteilorgane von einem Elektromotor angetrieben werden. Ferner beschreibt die DE 10 2007 024 645 A1 ein elektrisches Anbaugerät mit einem Elektroantrieb, der vom Schlepper her mit Strom versorgt wird. Die DE 10 2005 019 362 beschreibt die nähere Ausgestaltung einer elektrischen Schnittstelle zum Übertragen elektrischer Energie zwischen einem Schlepper und einem daran ankoppelbaren landwirtschaftlichen Arbeitsgerät. Ferner schlägt die DE 10303050 A1 zur Versorgung eines Anbaugeräts mit ausreichend elektrischer Energie vor, an die Zapfwelle des Schleppers einen Generator zu koppeln, der elektrische Lasten des Traktors und des Anbaugeräts mit einer Generatorspannung antreibt, die deutlich über der üblichen 12V-Portnetz-Spannung von Schleppern liegt.

Bei der Steuerung der Arbeitsaggregate, die die vorgenannten Kernaufgaben von landwirtschaftlichen Maschinen bewerkstelligen, ist ein großes Problem die Varianz der auf das Arbeitsaggregat einwirkenden äußeren Last. Beispielsweise ändert sich die Größe und Dichte eines von einem Ladewagen aufzunehmenden Erntegutschwads kontinuierlich und beträchtlich, so dass ein kontinuierlich laufender Förderrotor oft zu schnell läuft und andererseits bisweilen nicht schnell genug läuft. Ähnliche Probleme treten bei einer Mähmaschine sowie einem zugehörigen Konditionierer und Querförderband auf, wenn das zu mähende Halm- und Blattgut bei der Feldbearbeitung in Höhe und Dichte schwankt. Bei der Bodenbearbeitung können die Belastungen durch variierende Bodenbeschaffenheit, aber auch variierende Bodenkonturen und damit einhergehend variierende Arbeitstiefen entsprechend schwanken.

Um hier die Landmaschine in einem optimalen Betriebspunkt zu fahren, wurde bislang im Wesentlichen versucht, die äußere Belastung möglichst genau zu bestimmen oder gar zu messen, um beispielsweise die Rotationsgeschwindigkeit eines Förderrotors eines Ladewagens entsprechend hochzufahren, wenn höhere Belastungen auf das Arbeitsaggregat zukamen. Für diese Bestimmung der auftretenden Belastung wurden mehr oder minder aufwendige Sensorsysteme vorgeschlagen, beispielsweise Ultraschallsensoren zur Bestimmung der Größe und Dichte eines Erntegutschwads, um bei Auftreten eines dickeren und/oder dichteren Erntegutschwads den Förderrotor schneller laufen zu lassen oder die Fahrgeschwindigkeit zu bremsen. In ähnlicher Weise wurde auch vorgeschlagen, die Fördergeschwindigkeit eines Querförderbands einer Mähmaschine zu variieren, wenn größere Schnittgutmengen anfielen.

Die zur Bestimmung der äußeren Belastung erforderliche Sensorik ist jedoch nicht nur an sich recht aufwendig, sondern erfordert auch eine ausgefeilte Signalverarbeitung, um die äußerst komplexen Zusammenhänge zwischen den auftretenden Sensorsignalen und der tatsächlich am Arbeitsaggregat anfallenden Belastung in allen Facetten vorherzusagen.

Der vorliegenden Erfindung liegt hiervon ausgehend die Aufgabe zu Grunde, eine verbesserte Landmaschine der genannten Art zu schaffen, die Nachteile des Standes der Technik vermeidet und letzteren in vorteilhafterweise weiterbildet. Vorzugsweise soll mit einfachen Mitteln ohne Berücksichtigung komplexer Zusammenhänge und ausgefeilter Signalverarbeitung die Schlagkraft der von dem jeweiligen Arbeitsaggregat ausgeführten landwirtschaftlichen Funktion erhöht und der Arbeitseinsatz des Geräts optimiert werden.

Erfindungsgemäß wird diese Aufgabe durch eine Landmaschine gemäß Anspruch 1 gelöst. Bevorzugte Ausgestaltungen der Erfindung sind Gegenstand der abhängigen Ansprüche.

Es wird also vorgeschlagen, die äußeren Belastungen durch Futter- und Bodenverhältnisse direkt am Arbeitsaggregat bzw. dessen Antrieb zu erfassen. Um den Belastungszustand des Arbeitsaggregats präzise messen bzw. bestimmen zu können, wird als Antrieb für das Arbeitsaggregat ein Elektromotor verwendet, dessen Betriebsparameter sehr präzise gemessen werden können, so dass eine präzise Bestimmung des tatsächlichen Belastungszustandes möglich ist. Der gemessene Belastungszustand wird sodann zu einer selbstlernenden Regelung der Landmaschine genutzt, so dass auch ohne detaillierte Kenntnisse der genauen Zusammenhänge zwischen Erntegut- bzw. Feldbearbeitungsparametern und tatsächlichen Belastungszustand die Landmaschine bzw. das Arbeitsaggregat in dem gewünschten Arbeitspunkt gefahren werden kann. Erfindungsgemäß umfasst der Antrieb des Arbeitsaggregats einen Elektromotor, wobei die Steuervorrichtung Erfassungsmittel zur Erfassung zumindest eines Betriebsparameters des Elektromotors sowie einen selbstlernenden Regler zur Regelung des Arbeitsaggregats unter Verwendung des erfassten Betriebsparameters aufweist. Durch die Verwendung eines selbstlernenden Reglers wird ein sich selbst einstellendes System geschaffen, das wenige Grundkenntnisse über die oft komplexen Zusammenhänge von Feld- und Erntegutbeschaffenheit einerseits und Landmaschineneinstellung andererseits erfordert. Durch die leicht messbaren tatsächlichen Betriebsparameter des Elektromotors bzw. des Arbeitsaggregats als Antrieb kann ein sehr hilfreiches Wissen über den aktuellen Belastungszustand der Landmaschine bzw. auch über die Futter- und Bodenverhältnisse erzielt werden. Der Arbeitseinsatz des Geräts wird optimiert bzw. kann eine höhere Schlagkraft der landwirtschaftlichen Funktion durch immer an Futter bzw. Boden angepasste, maximal mögliche Fahrgeschwindigkeit erzielt werden.

Die Erfindung umfasst die Steuervorrichtung Erfassungsmittel zu Erfassung der elektrischen Leistungsaufnahme des Elektromotors, die einen sehr genauen Indikator für die Belastung des Arbeitsaggregats bzw. der Landmaschine darstellt, so dass der selbstlernende Regler, der das Arbeitsaggregat unter Verwendung der erfassten elektrischen Leistungsaufnahme regelt, den Betriebszustand des Arbeitsaggregats sehr genau an die externen Belastungen durch Futter- und Bodenverhältnisse anpassen kann.

Alternativ oder zusätzlich kann die Steuervorrichtung auch Erfassungsmittel zur Erfassung weiterer Betriebsparameter des Elektromotors und/oder des Arbeitsaggregats bzw. der Landmaschine aufweisen. Beispielsweise kann die Steuervorrichtung mittels geeigneter Sensoren eine Fahrgeschwindigkeit, einen auf das Arbeitsaggregat und/oder dessen Antrieb wirkenden Druck, eine Drehzahl des Arbeitsaggregats und/oder des Elektromotors, eine Kraft und/oder ein Drehmoment des Arbeitsaggregats und/oder dessen Antriebs bzw. Elektromotors aufweisen, so dass der selbstlernende Regler das Arbeitsaggregat dann unter Verwendung des entsprechenden, erfassten Betriebsparameters regelt.

In Weiterbildung der Erfindung umfasst der selbstlernende Regler eine adaptive Reglerstufe zur adaptiven Regelung der Leistungsaufnahme des Elektromotors. Durch eine adaptive Regelung des Elektromotors können nicht nur variierende äußere Einflussgrößen wie Erntegutmenge, Bodenhärte oder dergleichen ohne Erfassung dennoch berücksichtigt werden, sondern auch interne Varianzen des Systems wie beispielsweise sich im Förderkanal eines Ladewagens ergebende Ablagerungen oder Abnutzungen wie nachlassende Messerschärfe.

Insbesondere kann der Regler als Stellgröße die Antriebsgeschwindigkeit des Elektromotors selbst verändern, um das Arbeitsaggregat in einem optimalen Betriebspunkt zu halten. Wird beispielsweise festgestellt, dass bei einem Förderrotor eines Ladewagens bzw. dem diesen antreibenden Elektromotor die Leistungsaufnahme ansteigt, ist dies ein Zeichen dafür, dass ein größerer Erntegutschwad aufgenommen wird bzw. zu verarbeiten ist. Dem kann durch Erhöhung der Antriebsgeschwindigkeit Rechnung getragen werden.

Alternativ oder zusätzlich kann der Regler auch die Fahrgeschwindigkeit des Schleppers und/oder Landmaschine als Stellgröße variieren. Wird beispielsweise eine abfallende Leistungsaufnahme am Elektromotor des Arbeitsaggregats festgestellt, kann die Fahrgeschwindigkeit erhöht werden, um das Arbeitsaggregat zurück in den gewünschten Arbeitspunkt zu bringen.

Der gewünschte Arbeitspunkt des Arbeitsaggregats kann hierbei in verschiedener Art und Weise festgelegt werden. Beispielsweise kann der Regler derart ausgebildet sein, dass der Elektromotor des Arbeitsaggregats in einem Bereich optimalen Wirkungsgrads gehalten wird. Vorzugsweise jedoch hält der Regler den Elektromotor des Antriebsaggregats in einem Arbeitsbereich, in dem das Arbeitsaggregat seine maximale Leistung erbringt. Dies kann insbesondere dadurch bewerkstelligt werden, dass der Regler den Elektromotor in dessen Bereich maximaler, zulässiger Leistungsaufnahme hält. Vorteilhafterweise hält der Regler das Arbeitsaggregat in einem Bereich optimaler Arbeitsqualität.

Unter Umständen kann es jedoch auch vorteilhaft sein, für bestimmte landwirtschaftliche Funktionen das Arbeitsaggregat in einem anderen Betriebspunkt zu halten, beispielsweise um besonderen Beschaffenheiten des Ernteguts oder des Bodens Rechnung zu tragen. Alternativ oder zusätzlich zu der zuvor genannten Ausbildung des Reglers kann daher in vorteilhafter Weiterbildung der Erfindung vorgesehen sein, dass dem Regler Einstellmittel zugeordnet sind, mittels derer eine bestimmte Leistungsaufnahme des Elektromotors vorgebbar sind. Beispielsweise kann für besonders feuchtes Erntegut eine geringere als die maximale, mögliche Leistungsaufnahme vorgegeben werden, um eine schonendere Erntegutverarbeitung zu gewährleisten.

Die Erfassungsmittel, mittels derer die elektrische Leistungsaufnahme des Elektromotors erfasst werden, können grundsätzlich verschieden ausgebildet sein. Beispielsweise können die Erfassungsmittel einen Spannungsmesser umfassen, der die Spannung misst. Insbesondere können die Erfassungsmittel jedoch die Stromaufnahme des Elektromotors überwachen, die insbesondere bei gleichbleibender anliegender Spannung ein direktes Maß für die Leistungsaufnahme des Elektromotors und damit ein Maß für den Belastungszustand des Arbeitsaggregats ist.

Die Landmaschine selbst kann hierbei grundsätzlich in verschiedenen Ausbildungen in der genannten Art und Weise mit einem Elektromotor zum Antreiben des Arbeitsaggregats versehen und einer selbstlernenden Regeleinrichtung ausgestattet sein. Besondere Vorteile ergeben sich hierbei dann, wenn das Anbaugerät als Ladewagen ausgebildet ist, der eine Pickup mit einer Stachelwalze zur Aufnahme von Erntegut vom Boden, einen Förderrotor zur Förderung des aufgenommenen Ernteguts in einen Erntegutspeicher und/oder eine Dosierwalze zum Entladen des Ernteguts aus dem Erntegutspeicher aufweist, wobei der elektrische Antrieb umfassend einen Elektromotor und ein diesem gegebenenfalls zugeordnetes Getriebe die genannte Stachelwalze, den Förderrotor und/oder die Dosierwalze antreiben kann. Die selbstlernende Regelung kann hierbei den jeweiligen Elektromotor in der genannten Weise regeln.

Ebenfalls vorteilhaft ist der Einsatz eines Elektromotors mit zugehörigem selbstlernendem Regler bei einem Mähwerk, das an einen Schlepper anbaubar ist. Der Elektromotor kann hierbei den Arbeitskorpus des Messerrotors und/oder eine nachgeschaltete Konditionierwalze und/oder einen nachgeschalteten Querförderer antreiben und in der genannten Weise von dem selbstlernenden Regler geregelt sein.

Eine weitere vorteilhafte Anwendung ist in Weiterbildung der Erfindung eine Heuwerbungsmaschine in Form eines Schwaders oder eines Zetters, der zumindest einen Rechkreisel aufweist, der um eine aufrechte Drehachse antreibbar ist. Der Elektromotor treibt den Rechkreisel an und wird in der genannten Weise geregelt, um unterschiedlich dicken und/oder dichten Erntegutschwaden und/oder Erntegutschichten, die auf dem Boden liegen, gerecht zu werden.

Ferner ist eine besonders vorteilhafte Anwendung auch bei einer Kreiselegge gegeben, deren Rechzinken um üblicherweise aufrechte Drehachsen von einem Elektromotor angetrieben werden können, der in der genannten Weise von dem selbstlernenden, insbesondere adaptiven Regler geregelt wird, um trotz variierender Bodenbeschaffenheit die Kreiselegge im optimalen Betriebspunkt zu halten.

Die vorliegende Erfindung wird nachfolgend anhand eines bevorzugten Ausführungsbeispiels und zugehöriger Zeichnungen näher erläutert. In den Zeichnungen zeigen:
- Figur 1:: eine schematische Seitenansicht eines Ladewagens, der heckseitig an einen Schlepper angebaut ist, wobei der Ladewagen eine von einem Elektromotor antreibbare Aufnahmevorrichtung sowie eine von einem Elektromotor antreibbare Dosiervorrichtung aufweist,
- Figur 2:: eine schematische Seitenansicht einer Ballenpresse, die eine von einem Elektromotor antreibbare Aufnahmevorrichtung aufweist,
- Figur 3:: eine Draufsicht auf ein heckseitig an einen Schlepper anbaubares Mähwerk, das den Mähaggregaten nachgeordnet Querförderbänder zum Ablegen des geschnittenen Ernteguts in einem zentralen Schwad aufweist, wobei die Rotoren des Mähwerks und die Querförderbänder jeweils von einem elektrischen Antrieb angetrieben und mittels eines selbstlernenden Reglers geregelt sind,
- Figur 4:: eine Draufsicht auf eine heckseitig an einen Schlepper anbaubare Heuwerbungsmaschine in Form eines Schwaders, der zwei Schwadkreisel aufweist, die von einem elektrischen Antrieb angetrieben und einen selbstlernenden Regler geregelt sind, und
- Figur 5:: eine schematische Draufsicht auf eine heckseitig an einen Schlepper angebaute Bodenbearbeitungsmaschine In Form einer Kreiselegge, deren Kreiselzinken von Elektromotoren angetrieben und mittels eines selbstlernenden Reglers geregelt sind.

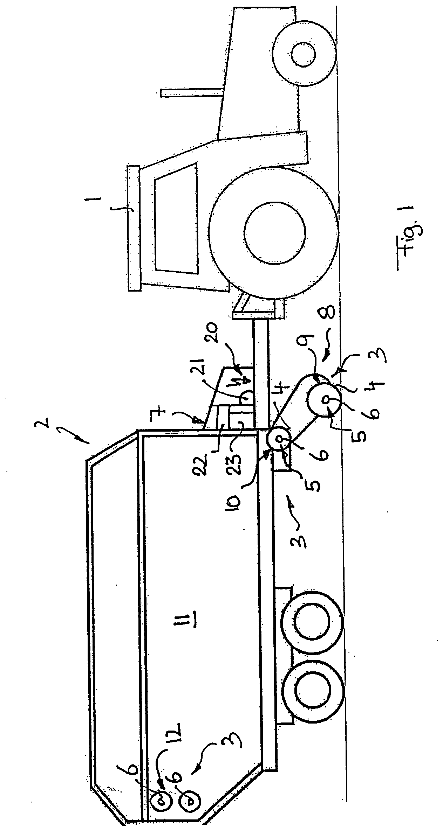

An den in Fig. 1 gezeigten Schlepper 1 ist ein Anbaugerät 2, in Form einer Erntemaschine angebaut, das nach einer vorteilhaften Ausführung der Erfindung in Form eines Ladewagens ausgebildet ist.

Der in Fig. 1 gezeigte Ladewagen umfasst hierbei mehrere Arbeitsaggregate 3, die jeweils einen drehbar gelagerten Arbeitskorpus 4 umfassen. Ein erstes Arbeitsaggregat 3 bildet hierbei die Pickup 17 umfassend eine Stachelwalze 9 zum Aufsammeln von Erntegut vom Boden. Die Stachelwalze 9, die um eine liegende Querachse drehbar gelagert ist, wird hierbei rotatorisch angetrieben, um am Boden liegendes Erntegut in einen Förderkanal zu fördern. Die genannte Stachelwalze 9 kann in Weiterbildung der Erfindung einen rohrförmigen Arbeitskorpus 4 umfassen, von dessen Umfang stachelförmige Mitnehmerzinken abstehen.

Ein weiteres Arbeitsaggregat 3 ist ein Förderer umfassend einen Förderrotor 10, der das von der Pickup 17 aufgenommene Erntegut übernimmt und in den Erntegutspeicher 11 des Ladewagens fördert. Auch der Förderrotor 10 kann in Weiterbildung der Erfindung einen rohrförmigen Arbeitskorpus 4 umfassen, von dessen Umfang Rotorzinken abstehen, die das Erntegut fördern.

Ein weiteres Arbeitsaggregat des Ladewagens kann eine heckseitig angebrachte Dosiervorrichtung mit mindestens einer, vorzugsweise mehreren Dosierwalzen 12, die heckseitig das Erntegut aus dem Erntegutspeicher 11 dosiert abladen. Die genannten Dosierwalzen 12 können in Weiterbildung der Erfindung ebenfalls rohrförmig ausgebildete Arbeitskorpi 4 umfassen, von denen Dosierzinken abstehen.

Um die genannten Arbeitskörper 4 der Arbeitsaggregate anzutreiben, sitzt in Weiterbildung der Erfindung vorzugsweise jeweils im Inneren des jeweiligen Arbeitskorpus 4 ein Elektromotor 6.

Dabei kann der Elektromotor 6 mit einem nicht gezeigten Getriebe verbunden sein, das zusammen mit dem Elektromotor 6 den Antrieb 5 für das jeweilige Arbeitsaggregat bildet.

Die Antriebe 5 mit den Elektromotoren 6 werden hierbei mittels einer Steuervorrichtung 7 gesteuert, die in der gezeichneten Ausführung einen an dem Ladewagen angebrachten Rechner umfasst, der jedoch auch auf dem Schlepper 1 positioniert sein könnte. Die Steuervorrichtung 7 kann hierbei in an sich bekannter Weise von dem Schlepper 1 her Steuerbefehle empfangen und in entsprechende Steuerbefehle umsetzen, so z.B. Eingabebefehle zum Einschalten und Ausschalten der Arbeitsaggregate 3.

Darüber hinaus umfasst die Steuervorrichtung 7 auch einen Regler 22, der die Antriebe 5 der Arbeitsaggregate 3 und vorteilhafterweise auch die Fahrgeschwindigkeit des Schleppers 1 steuert, um variierende äußere Belastungen zu kompensieren bzw. den Betrieb des Ladewagens an die Variationen der äußeren Belastungen anzupassen, so dass der Ladevorgang mit optimaler Effizienz unter voller Ausnutzung der Leistungsfähigkeit des Ladewagens erfolgt.

Die Steuervorrichtung 7 umfasst hierzu Erfassungsmittel 20, die die elektrische Leistungsaufnahme der Elektromotoren 6 überwachen. Insbesondere können die Erfassungsmittel 20 Strommesser 21 aufweisen, mittels derer die Stromaufnahme der Elektromotoren bestimmt wird. Bei einer konstanten Versorgungsspannung ist die Stromaufnahme ein präzises Maß dafür, welche Belastung an den Arbeitsaggregaten 3 und damit den Elektromotoren 6 anliegt. Soweit die Betriebsspannung Schwankungen unterliegen kann, kann alternativ oder zusätzlich auch ein Spannungsmesser vorgesehen sein, um die an den Elektromotoren 6 anliegende Spannung zu überwachen.

Der Regler 22 variiert nunmehr verschiedene Betriebsparameter des Ladewagens derart, dass die überwachte Leistungsaufnahme der Elektromotoren 6 in einem gewünschten Bereich liegt. Dieser gewünschte Bereich kann hierbei grundsätzlich in verschiedene Art und Weise vorgegeben bzw. bestimmt werden, beispielsweise kann die Steuervorrichtung 7 Eingabemittel aufweisen, mittels derer die gewünschte Leistungsaufnahme festgelegt werden kann. Alternativ oder zusätzlich kann der Regler 22 die Betriebsparameter des Ladewagens auch so verändern, dass die Elektromotoren 6 insbesondere der Aufnahmevorrichtung 8 in einem optimalen Effizienzbereich und/oder in einem Bereich maximaler, noch zulässiger Leistungsaufnahme betrieben werden. Gegebenenfalls kann für den gewünschten Betriebspunkt, den es einzuregeln gilt, auch eine variierende Funktion vorgegeben werden, beispielsweise um in einem Anfangsstadium des Ladevorgangs, in dem der Laderaum bzw. Erntegutspeicher 11 noch leer ist, schneller zu laden als in einem späteren Stadium.

In Weiterbildung der Erfindung umfasst der Regler 22 eine adaptive Reglerstufe 23, die die Leistungsaufnahme der Elektromotoren 6 der Antriebe 5 adaptiv regelt, wobei die adaptive Reglerstufe 23 verschiedene Stellgrößen variieren kann.

Insbesondere kann der Regler 22 die Antriebsgeschwindigkeit der Elektromotoren 6 der Arbeitsaggregate variieren, um auf Variationen der äußeren Belastung zu reagieren bzw. diese zu kompensieren. Wird beispielsweise der aufzunehmende Erntegutschwad größer, wodurch die Leistungsaufnahme des Elektromotors 6 der Stachelwalze 9 und/oder des Förderrotors 10 ansteigt, kann der Regler 22 die Drehzahl des Elektromotors 6 erhöhen, um den zunehmenden Erntegutstrom zu bewältigen.

Alternativ oder zusätzlich kann der Regler 22 auch ein Stellsignal für die Fahrgeschwindigkeit des Schleppers bereitstellen, um die Fahrgeschwindigkeit des Schleppers zu verändern und an den variierenden Erntegutstrom anzupassen. Dieses Stellsignal kann entweder in Form einer Anzeige bereitgestellt werden, so dass der Fahrer das Stellsignal umsetzt. Alternativ kann auch eine halbautomatische oder vollautomatische Umsetzung durch einen Fahrgeschwindigkeitsregler vorgesehen sein.

Wird beispielsweise der Erntegutschwad, der von dem Ladewagen aufgenommen werden soll, kleiner, kann der Regler 22 die Fahrgeschwindigkeit erhöhen, um den Ladewagen mit möglichst voller Ausnutzung seiner Leistungsfähigkeit zu betreiben. Das Kleinerwerden des Erntegutstroms bzw. -schwads wird hierbei durch einen Abfall der Leistungsaufnahme des Elektromotors 6 der Stachelwalze 9 und/oder des Förderrotors 10 festgestellt.

In ähnlicher Weise lassen sich auch die Arbeitsaggregate 3 anderer Ernte- oder Bodenbearbeitungsmaschinen mittels eines einen Elektromotor 6 aufweisenden Antriebs 5 und einem entsprechenden Regler 22 regeln, wie die weiteren Figuren zeigen.

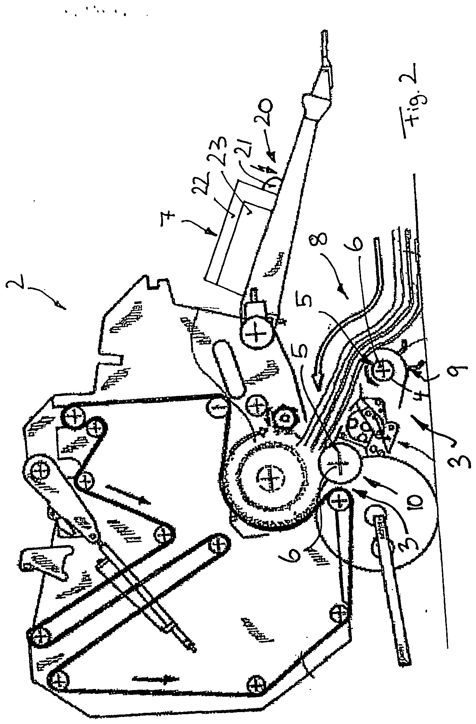

Gemäß Figur 2 kann das Anbaugerät 2 auch als Ballenpresse ausgebildet sein, die ähnlich wie der zuvor beschriebene Ladewagen eine Aufnahmevorrichtung 8 umfassend eine Stachelwalze 9 und einen Förderrotor 10 besitzt, der das aufgenommene Erntegut in eine Pressenkammer fördert. Auch bei dem Beispiel gemäß Figur 2 können die genannten Arbeitsaggregate 3 mittels eines Elektromotors 6 angetrieben werden, der in ähnliche Weise wie für den Ladewagen beschrieben von einem Regler 22 angesteuert wird.

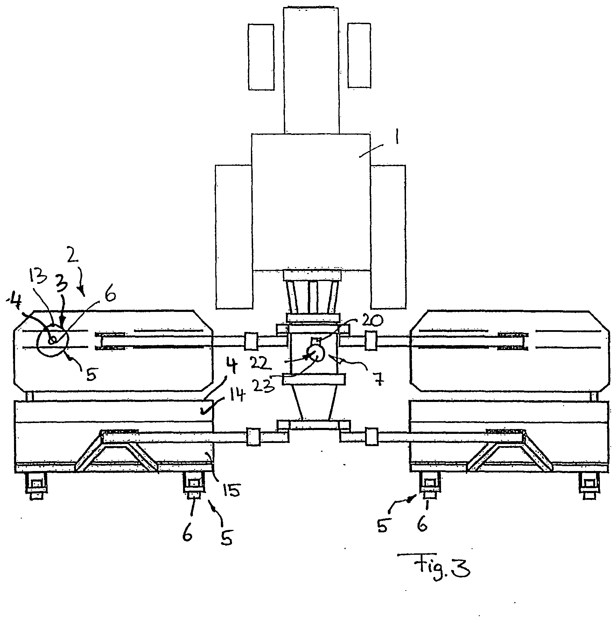

Das in Fig. 3 gezeigte heckseitig angebaute Mähwerk kann in an sich bekannter Weise eine Vielzahl von Messertrommeln bzw. Messerrotoren 13 umfassen, die um aufrechte Achsen antreibbar sind und radial abstehende bzw. ausschwenkbare Messer besitzen, um das stehende Erntegut zu schneiden.

Die genannten Messerrotoren 13 können in ähnlicher Weise wie der Ladewagen rohrförmigen Arbeitskorpi 4 aufweisen, in deren Innenraum in der in Fig. 2 gezeigten Weise ein Elektromotor 6 sowie ein Getriebe angeordnet sein können, um die Messerrotoren 13 anzutreiben.

Wie Fig. 3 zeigt, kann das Mähwerk nach der gezeichneten Ausführung auch noch eine den Messerrotoren 13 nachgeschaltete Konditionierwalze 14 umfassen, die das geschnittene Erntegut durch mechanische Bearbeitung konditioniert, insbesondere knickt und/oder die Oberfläche aufbricht, um ein rascheres Trocknen zu ermöglichen. Die genannte Konditionierwalze 14 umfasst vorteilhafterweise ebenfalls einen Arbeitskorpus 4, in den ein Antrieb 5 umfassend einen Elektromotor 6 und ggf. ein Getriebe integriert ist.

Weiterhin kann das Mähwerk der jeweiligen Konditionierwalze 14 nachgeschaltet einen Querförderer 15 beispielsweise in Form eines Querförderbands aufweisen, um das geschnittene und konditionierte Erntegut hinter dem Mähwerk quer zu fördern und in einem Schwad abzulegen. Sind beispielsweise, wie in Figur 3 gezeigt, zwei seitlich auskragend angebaute Mähwerke vorgesehen, können diese das gemähte Gut durch die Querförderer 15 mittig in einem zentralen Schwad ablegen.

Die Elektromotoren 6 der Messerrotoren 13, der Konditionierwalze 14 und/oder des Querförderers 15 können in der zuvor beschriebenen Weise von einem selbstlernenden Regler 22 gesteuert werden, um auf Variationen der äußeren Belastung zu reagieren bzw. diese zu kompensieren, indem die Leistungsaufnahme des Elektromotors 6 überwacht und entsprechend geregelt wird. Variierende äußere Belastungen können beispielsweise durch einen unterschiedlich dichten und/oder hohen Bewuchs des zu mähenden Feldes bedingt sein.

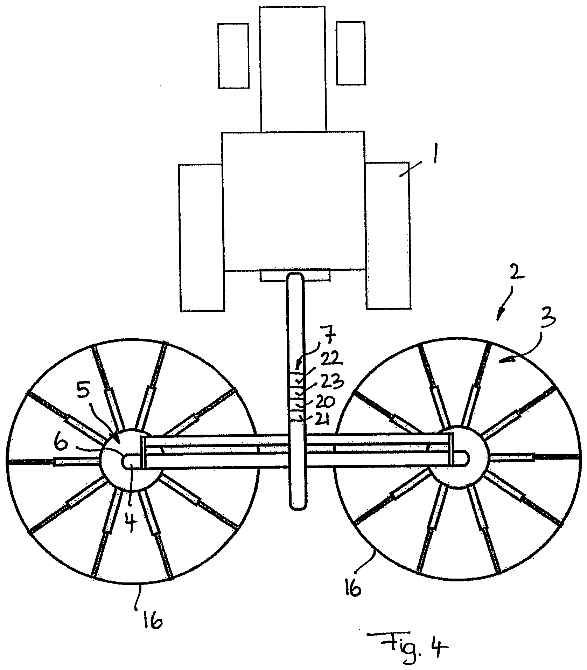

Wie Fig. 4 zeigt, kann das Anbaugerät 2 auch als Heuwerbungsmaschine in Form eines Schwaders ausgebildet sein, der in der gezeichneten Ausführungsform zwei um jeweils eine aufrechte Achse rotatorisch antreibbare Rechkreisel 16 aufweist. Die genannten Rechkreisel 16 der Heuwerbungsmaschine können in Weiterbildung der Erfindung hierbei jeweils einen Arbeitskorpus 4 umfassen, in den ein Antrieb 5 mit einem Elektromotor 6 und ggf. einem Getriebe integriert sind. Der Elektromotor 6 wird mittels des schon erläuterten Reglers 22 geregelt.

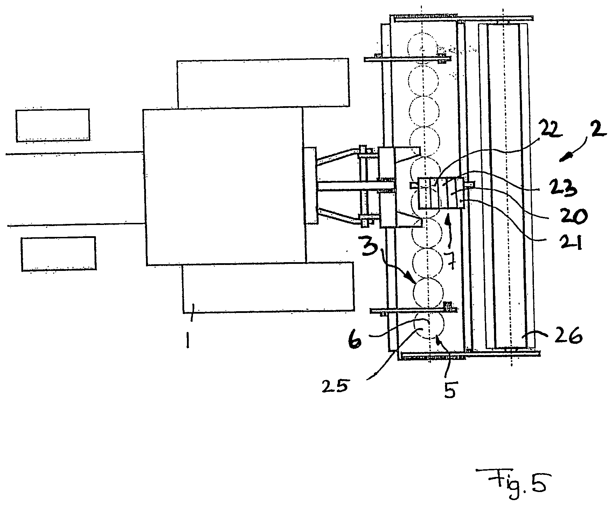

Wie Fig. 5 zeigt, kann das Anbaugerät 2 auch als Kreiselegge ausgebildet sein, die in der gezeichneten Ausführungsform eine quer zur Fahrtrichtung ausgerichtete Reihe von Zinkenkreisel 25 aufweist, die jeweils um eine aufrechte Achse rotatorisch antreibbar sind. Die genannten Zinkenkreisel umfassen dabei jeweils nach unten auf den Boden gerichtete Eggenzinken sowie einen Arbeitskorpus 4, in den ein Antrieb 5 mit einem Elektromotor 6 und ggf. einem Getriebe integriert sind. Die Kreiselegge kann dabei für jeden Zinkenkreisel 25 separat einen Elektromotor 6 besitzen. Alternativ können auch einzelne oder mehrere Zinkenkreisel 25 zu einer Gruppe zusammengefasst sein, die von einem Elektromotor in dem Arbeitskorpus eines Zinkenkreisels angetrieben werden. Wie Fig. 5 zeigt, läuft den Eggenzinken 25 eine Walze 26 nach. Die Elektromotoren 6 werden in der genannten Weise von dem Regler 22 geregelt.

## Patentansprüche

1. Landmaschine, insbesondere an einen Schlepper (1) anbaubare Ernte- oder Bodenbearbeitungsmaschine (2), mit zumindest einem von einem Antrieb (5) antreibbaren Arbeitsaggregat (3) zum Ausführen einer landwirtschaftlichen Funktion, das in Betrieb von einer variierenden Belastung wie Erntegutmenge, Bodenhärte und dergleichen beaufschlagt ist, sowie einer Steuervorrichtung (7) zur Steuerung des Antriebs (5) des Arbeitsaggregats (3) in Abhängigkeit der äußeren Belastung, wobei der Antrieb (5) einen Elektromotor (6) umfasst und die Steuervorrichtung (7) Erfassungsmittel (20) zur Erfassung zumindest eines Betriebsparameters des Elektromotors sowie einen selbstlernenden Regler (22) zur Regelung des Antriebs (5) unter Verwendung des erfassten Betriebsparameters aufweist, **dadurch gekennzeichnet, dass** die Steuervorrichtung (7) Erfassungsmittel (20) zur Erfassung der elektrischen Leistungsaufnahme des Elektromotors aufweist und der selbstlernende Regler (22) zur Regelung des Antriebs (5) unter Verwendung der erfassten elektrischen Leistungsaufnahme ausgebildet ist.

2. Landmaschine nach dem vorhergehenden Anspruch, wobei die Steuervorrichtung (7) Erfassungsmittel (20) zur Erfassung weiterer Betriebsparameter des Elektromotors und/oder des Arbeitsaggregats (3) und/oder der Landmaschine, insbesondere Geschwindigkeit, Druck, Drehzahl, Kraft und/oder Drehmoment, aufweist und der selbstlernende Regler (22) zur Regelung des Antriebs (5) unter Verwendung des genannten Betriebsparameters ausgebildet ist.

3. Landmaschine nach einem der vorhergehenden Ansprüche, wobei der selbstlernende Regler (22) eine adaptive Reglerstufe (23) zur adaptiven Regelung der Leistungsaufnahme des Elektromotors (6) besitzt.

4. Landmaschine nach einem der vorhergehenden Ansprüche, wobei der Regler (22) als Stellgröße die Antriebsgeschwindigkeit des Elektromotors und/oder ein Übersetzungsverhältnis eines dem Elektromotor (6) zugeordneten Antriebsgetriebes in Abhängigkeit der erfassten Leistungsaufnahme des Elektromotors (6) verändert.

5. Landmaschine nach einem der vorhergehenden Ansprüche, wobei der Regler (22) als Stellgröße die Fahrgeschwindigkeit des Schlepper (1) und/oder der Landmaschine in Abhängigkeit der erfassten Leistungsaufnahme des Elektromotors (6) verändert.

6. Landmaschine nach einem der vorhergehenden Ansprüche, wobei der Regler (22) den Elektromotor (6) des Antriebs (5) des Arbeitsaggregats (3) in einem Bereich optimalen Wirkungsgrads und/oder maximaler zulässiger Leistungsaufnahme hält.

7. Landmaschine nach einem der vorhergehenden Ansprüche, wobei der Regler (22) Einstellmittel zur Vorgabe einer bestimmten Leistungsaufnahme des Elektromotors (6) aufweist.

8. Landmaschine nach einem der vorhergehenden Ansprüche, wobei die Erfassungsmittel (20) einen Strommesser (21) zur Erfassung der Stromaufnahme des Elektromotors (6) besitzen und/oder der Regler (22) die Stromaufnahme des Elektromotors (6) regelt.

9. Landmaschine nach einem der vorhergehenden Ansprüche, die als Ladewagen ausgebildet ist, der eine Pickup mit einer Stachelwalze (9) zur Aufnahme von Erntegut vom Boden, einen Förderrotor (10) zur Förderung des aufgenommenen Ernteguts in einen Erntegutspeicher (11) und/oder eine Dosierwalze (12) zum Entladen des Ernteguts aus dem Erntegutspeicher (11) aufweist, wobei der Antrieb (5) der Stachelwalze (9), des Förderrotors (10) und/oder der Dosierwalze (12) einen Elektromotor (6) aufweist, der von dem Regler (22) geregelt wird.

10. Landmaschine nach einem der vorhergehenden Ansprüche, die als Presse ausgebildet ist, die eine Pickup mit einer Stachelwalze (9) zur Aufnahme von Erntegut vom Boden sowie einem Förderrotor (10) zur Förderung des aufgenommenen Ernteguts in einen Pressenraum aufweist, wobei der Antrieb (5) der Stachelwalze (9) und/oder des Förderrotors (10) einen Elektromotor (6) aufweist, der von dem Regler (22) geregelt wird.

11. Landmaschine nach einem der vorhergehenden Ansprüche, die als Mähmaschine umfassend zumindest einen Messerrotor (13) und/oder einen Konditioniererkorpus (14) und/oder einen Querförderer (15) ausgebildet ist, wobei der Antrieb (5) des Messerrotors (13) und/oder des Konditioniererkorpus (14) und/oder des Querförderers (15) einen Elektromotor (6) aufweist, der von dem genannten Regler (22) geregelt ist.

12. Landmaschine nach einem der vorhergehenden Ansprüche, die als Heuwerbungsmaschine in Form eines Schwaders und/oder Zetters ausgebildet ist, der zumindest einen um eine Achse rotatorisch antreibbaren Rechkreisel (16) aufweist, dessen Antrieb (5) einen Elektromotor (6) aufweist, der von dem Regler (22) regelbar ist.

13. Landmaschine nach einem der vorhergehenden Ansprüche, die als Bodenbearbeitungsmaschine vorzugsweise in Form einer Kreiselegge ausgebildet ist, die zumindest einen vorzugsweise eine Vielzahl von, rotatorisch antreibbaren Eggenzinken aufweist, deren Antrieb (5) einen Elektromotor (6) aufweist, der von dem Regler (22) regelbar ist.

## Claims

1. Agricultural machine, in particular a harvesting or soil-working machine (2) attachable to a tractor (1), having at least one working unit (3) drivable by a drive (5) for performing an agricultural function, which unit is applied with a varying load, such as an amount of harvested material, soil hardness and the like during operation, as well as having a control device (7) for controlling the drive (5) of the working unit (3) depending on the external load, wherein the drive (5) includes an electric motor (6) and the control device (7) comprises detection means (20) for detecting at least one operating parameter of the electric motor, as well as a self-learning regulator (22) for regulating the drive (5) using the detected operating parameter, **characterized in that** the control device (7) comprises detection means (20) for detecting the electric power consumption of the electric motor, and the self-learning regulator (22) is configured for regulating the drive (5) using the detected power consumption.

2. Agricultural machine according to the preceding claim, wherein the control device (7) comprises detection means (20) for detecting further operating parameters of the electric motor and/or of the working unit (3) and/or of the agricultural machine, in particular speed, pressure, rotational speed, force and/or torque, and the self-learning regulator (22) is configured for regulating the drive (5) using the mentioned operating parameter.

3. Agricultural machine according to one of the preceding claims, wherein the self-learning regulator (22) has an adaptive regulator stage (23) for adaptive regulation of the power consumption of the electric motor (6).

4. Agricultural machine according to one of the preceding claims, wherein the regulator (22) alters, as a setting parameter, the driving speed of the electric motor and/or a transmission ratio of a drive gear mechanism assigned to the electric motor (6) dependent upon the detected power consumption of the electric motor (6).

5. Agricultural machine according to one of the preceding claims, wherein the regulator (22) alters, as a setting parameter, the driving speed of the tractor (1) and/or of the agricultural machine dependent upon the detected power consumption of the electric motor (6).

6. Agricultural machine according to one of the preceding claims, wherein the regulator (22) maintains the electric motor (6) of the drive (5) of the working unit (3) in an optimum efficiency range and/or a range of maximum permissible power consumption.

7. Agricultural machine according to one of the preceding claims, wherein the regulator (22) comprises adjusting means for setting a determined power consumption of the electric motor (6).

8. Agricultural machine according to one of the preceding claims, wherein the detection means (20) have an ammeter (21) for detecting the electric consumption of the electric motor (6) and/or the regulator (22) regulates the electric consumption of the electric motor (6).

9. Agricultural machine according to one of the preceding claims, which is configured as a loading vehicle, which comprises a pick-up with a spiked roller (9) for picking-up harvested material from the ground, a conveyor rotor (10) for conveying the picked-up harvested material into a harvested-material storage (11) and/or a dosing roller (12) for unloading the harvested material from the harvested material storage (11), wherein the drive (5) of the spiked roller (9), of the conveyor rotor (10) and/or of the dosing roller (12) comprises an electric motor (6) regulated by the regulator (22).

10. Agricultural machine according to one of the preceding claims, which is configured as a press, which comprises a pick-up with a spiked roller (9) for picking-up harvested material from the ground, as well as a conveyor rotor (10) for conveying the picked-up harvested material into a pressing room, wherein the drive (5) of the spiked roller (9) and/or of the conveyor rotor (10) comprises an electric motor (6) regulated by the regulator (22).

11. Agricultural machine according to one of the preceding claims, which is formed as a mowing machine including at least one blade rotor (13) and/or a conditioning body (14) and/or a transversal conveyor (15), wherein the drive (5) of the blade rotor (13) and/or of the conditioning body (14) and/or of the transversal conveyor (15) comprises an electric motor (6) regulated by the said regulator (22).

12. Agricultural machine according to one of the preceding claims, which is formed as a haymaking machine in the form of a rake and/or tedder, which comprises at least one rotationally-drivable rotary rake (16), the drive (5) of which comprises an electric motor (6) which can be regulated by the regulator (22).

13. Agricultural machine according to one of the preceding claims, which is formed as a soil-working machine, preferably in the form of a rotary harrow having at least one, preferably a plurality of rotationally-drivable harrow tines, the drive (5) of which comprises an electric motor (6) which can be regulated by the regulator (22).

## Revendications

1. Machine agricole, en particulier une moissonneuse ou une machine pour le travail du sol (2) pouvant être montée sur un tracteur (1), étant équipée d'au moins une unité de travail (3) pouvant être entraînée par un entraînement (5) afin d'exécuter une tâche agricole et qui, pendant la marche, est appliquée avec une charge variable comme la quantité récoltée, la dureté du sol et autres charges similaires, ainsi que d'un dispositif de commande (7) pour contrôler l'entrainement (5) de l'unité de travail (3) en fonction de la charge extérieure, l'entraînement (5) comprenant un moteur électrique (6) et le dispositif de commande (7) étant doté de moyens de détection (20) pour enregistrer au moins un paramètre d'exploitation du moteur électrique ainsi que d'un régulateur (22) auto-apprenant pour réguler l'entraînement (5) en utilisant le paramètre d'exploitation saisi, **caractérisée en ce que** le dispositif de commande (7) comprend des moyens de détection (20) pour enregistrer la puissance absorbée électrique du moteur électrique et **en ce que** le régulateur (22) auto-apprenant est conçu pour régler l'entraînement (5) en utilisant la puissance absorbée électrique saisie.

2. Machine agricole selon la revendication précédente, le dispositif de commande (7) comportant des moyens de détection (20) pour enregistrer des paramètres de fonctionnement complémentaires du moteur électrique et/ou de l'unité de travail (3) et/ou de la machine agricole, en particulier la vitesse, la pression, le régime, la force et/ou le couple, et le régulateur (22) auto-apprenant étant conçu pour régler l'entraînement (5) en utilisant ledit paramètre d'exploitation.

3. Machine agricole selon l'une quelconque des revendications précédentes, **caractérisée en ce que** le régulateur (22) auto-apprenant possède un niveau de régulation adaptatif (23) pour une régulation adaptative de la puissance absorbée du moteur électrique (6).

4. Machine agricole selon l'une quelconque des revendications précédentes, **caractérisée en ce que** le régulateur (22) modifie, en tant que grandeur de réglage, la vitesse d'entraînement du moteur électrique et/ou un rapport de transmission d'un mécanisme d'entraînement assigné au moteur électrique (6) en fonction de la puissance absorbée enregistrée du moteur électrique (6).

5. Machine agricole selon l'une quelconque des revendications précédentes, **caractérisée en ce que** le régulateur (22) modifie, en tant que grandeur de réglage, la vitesse de déplacement du tracteur (1) et/ou de la machine agricole en fonction de la puissance absorbée enregistrée du moteur électrique (6).

6. Machine agricole selon l'une quelconque des revendications précédentes, **caractérisée en ce que** le régulateur (22) maintient le moteur électrique (6) de l'entraînement (5) de l'unité de travail (3) dans une fourchette optimale de rendement et/ou de puissance absorbée admissible maximum.

7. Machine agricole selon l'une quelconque des revendications précédentes, **caractérisée en ce que** le régulateur (22) présente des moyens de réglage pour prédéterminer une puissance absorbée spécifique du moteur électrique (6).

8. Machine agricole selon l'une quelconque des revendications précédentes, les moyens de détection (20) étant équipés d'un ampèremètre (21) pour enregistrer la consommation de courant du moteur électrique (6) et/ou le régulateur (22) réglant la consommation de courant du moteur électrique (6).

9. Machine agricole selon l'une quelconque des revendications précédentes, **caractérisée en ce qu'**elle est conçue comme une autochargeuse qui comporte un pick-up avec un brise-motte (9) pour ramasser la récolte au sol, un rotor de transport (10) pour acheminer la récolte ramassée dans un silo de récolte (11) et/ou un rouleau doseur (12) pour décharger la récolte du silo de récolte (11), l'entraînement (5) du brise-motte (9), du rotor d'alimentation (10) et/ou du rouleau doseur (12) présentant un moteur électrique (6) qui est réglé par le régulateur (22).

10. Machine agricole selon l'une quelconque des revendications précédentes, laquelle est conçue comme une presse comportant un pick-up avec un brise-motte (9) pour ramasser la récolte au sol ainsi qu'un rotor d'alimentation (10) pour acheminer la récolte ramassée à l'intérieur d'une presse, l'entraînement (5) du brise-motte (9) et/ou du rotor d'alimentation (10) présentant un moteur électrique (6) qui est réglé par le régulateur (22).

11. Machine agricole selon l'une quelconque des revendications précédentes, laquelle est conçue comme une faucheuse comprenant au moins un rotor porte-lames (13) et/ou un corps de conditionnement (14) et/ou un convoyeur transversal (15), l'entraînement (5) du rotor porte-lames (13) et/ou du corps de conditionnement (14) et/ou du convoyeur transversal (15) comportant un moteur électrique (6) qui est réglé par ledit régulateur (22).

12. Machine agricole selon l'une quelconque des revendications précédentes, laquelle est conçue comme une faneuse en forme d'andaineur et/ou d'épandeur qui comporte au moins un rotor râteleur (16) pouvant être entraîné en rotation autour d'un axe, dont l'entraînement (5) présente un moteur électrique (6) qui peut être ajusté par le régulateur (22).

13. Machine agricole selon l'une quelconque des revendications précédentes, laquelle est conçue comme une machine pour le travail du sol, de préférence en forme de herse rotative comportant au moins un dent, de préférence un grand nombre de dents de herse pouvant être entraînées en rotation, dont l'entraînement (5) présente un moteur électrique (6) qui peut être réglé par le régulateur (22).
